# EUROPEAN PATENT SPECIFICATION

(11) **EP 4 700 329 B1**
(45) Date of publication and mention of the grant of the patent: **28.10.2026**
(21) Application number: 24195997.2
(22) Date of filing: 22.08.2024
(51) Int. Cl.: G01B 15/02

(54) **THIN LAYER THICKNESS ESTIMATION USING ELECTRON BACKSCATTERING**
DÜNNSCHICHTDICKENSCHÄTZUNG MITTELS ELEKTRONENRÜCKSTREUUNG
ESTIMATION D'ÉPAISSEUR DE COUCHE MINCE À L'AIDE D'UNE RÉTRODIFFUSION D'ÉLECTRONS

(43) Date of publication of application: 25.02.2026
(73) Proprietor: FEI COMPANY, Hillsboro, OR 97124 (US)
(72) Inventor: HOLZER, Jakub, Brno (CZ); PETREK, Martin, Brno (CZ); VYSTAVEL, Tomás, Brno (CZ); STRAKA, Branislav, Brno (CZ)
(74) Representative: Boult Wade Tennant LLP

(56) References cited:
- US-A1- 2020 135 427
- BACIOCCHI M ET AL: "HIGH ACCURACY THICKNESS MEASUREMENTS BY MEANS OF BACKSCATTERING ELECTRON METROLOGY", JOURNAL OF VACUUM SCIENCE AND TECHNOLOGY: PART B, AVS / AIP, MELVILLE, NEW YORK, NY, US, vol. 13, no. 6, 1 November 1995 (1995-11-01), pages 2676 - 2681, XP000558338, ISSN: 1071-1023, DOI: 10.1116/1.588048

## Description

### FIELD OF THE INVENTION

The present invention relates to methods and systems of estimating thicknesses of a sample, such as a thin layer sample. In particular, to methods and systems of determining a thickness function using electron backscattering data in order to estimate thicknesses of the sample.

### BACKGROUND

Electron backscattered diffraction is a well-known technique for obtaining information about samples, and is of particular use in the ever expanding field of semiconductors. The continuing miniaturisation and increasing complexities of components has led to an increased need for more accurate analysis methods and reliable production processes for semiconductor components.

Film thickness is a key factor that affects the production of smaller, but still high quality, semiconductor components in this field. A sample's properties, such as conductance, permeability and strength, all relate to its thickness in some way. As such, accurate thickness measurements are an important part of production processes and quality control checks, particularly for thin film semiconductor components.

Several backscattering methods for determining thicknesses of such films already exist. For example, *"*Thickness Determination of Ultra-Thin Films Using Backscattered Electron Spectra of a New Toroidal Electrostatic Spectrometer" by F. Schlichting et al., Scanning Vol. 21, 3, (1999), discusses a method for thickness determination of thin films on bulk aluminium using backscattered electron spectra obtained by a polar, toroidal, electrostatic spectrometer.

*"*Thickness measurement of a thin oxide layer by secondary electron emission" by K. Okamoto, Review of Scientific Instruments, 51, 302, (1980), describes a method for measuring the thickness of a very thin oxide layer by secondary electron emission. The secondary electron signals are measured for an oxide-covered silicon surface and a reference surface by using the line mode of scanning electron microscope. Their ratio correlates with the thickness of oxide layer, and the thickness of an oxide layer can be obtained by measuring the ratio.

*"*Silicon thin films thickness estimation: A Monte Carlo simulation study" by M. Babazadeh, Optik ,126, (2015), describes a theoretical study for silicon thin film thickness measurement that is based on incident low energy electron beam on the film and counting the transmitted/incident electron fraction at a Geiger-Muller detector. The thin film thickness distribution is estimated from an exponential relation obtained from counting the fraction of transmitted/incident electron at different thicknesses. By using this obtained equation, the thickness of the silicon thin film can be estimated.

However, these conventional measurement methods suffer from a variety of issues, including difficulties measuring on such a small scale, difficulties evaluating signal strength, inaccurate results and restrictions on particular film materials. There is therefore a need for improved methods and systems for determining thicknesses of samples.

In further prior art, US 2020/135427 A1 relates to preparation of samples and methods of analysis for transmission electron microscopes and scanning transmission electron microscopes.

### SUMMARY

In a first aspect, there is a method of determining parameters of a thickness function for estimating a thickness of a sample. The thickness function defines a relationship between the thickness of the sample and a statistical electron characteristic. The method comprising obtaining backscattered electron data of the sample using a direct charged particle detector comprising an array of pixels and configured to count the number of backscattered electrons detected by each pixel of the array when an electron beam is incident upon the sample. The backscattered electron data comprises data sets. The data sets comprise the number of backscattered electrons detected by each pixel of the array when the electron beam is incident upon a respective region of the sample. The thickness of the sample at each respective region is known. The method further comprises determining, for each data set, a respective statistical electron characteristic, and fitting the known thicknesses and the determined statistical electron characteristics to the thickness function to determine the parameters of the thickness function.

An electron interaction volume of the electron beam may be sized so that the maximum depth from which the backscattered electrons reach the direct charged particle detector is greater than or equal to a maximum thickness of the sample. The electron interaction volume is the volume within which electrons of the incident electron beam interact with the sample.

The determined statistical electron characteristic may be one of, or based on one of a determined average electron count, a determined median electron count, a determined quantile electron count or a determined total electron count. The determined average electron count is the average value determined from all of the pixels of the array when the electron beam is incident upon a region of the sample. The determined median electron count is the median value determined from all of the pixels of the array when the electron beam is incident upon a region of the sample. The determined quantile electron count is a selected quantile value determined from all of the pixels of the array when the electron beam is incident upon a region of the sample. The determined total electron count is the total value determined from all of the pixels of the array when the electron beam is incident upon a region of the sample.

The thickness function may define that the determined statistical electron characteristic increases with sample thickness.

The method may further comprise estimating the thickness of the sample at a region of the sample based on the determined parameters of the thickness function and the determined statistical electron characteristic at that region.

The method may further comprise estimating the thickness of a different sample at a region of the different sample based on the determined parameters of the thickness function and the determined statistical electron characteristic at that region of the different sample, the different sample having the same, or substantially the same, chemical composition as the sample.

The step of estimating the thickness of the sample or the different sample at a region of the sample or the different sample may comprise obtaining an electron backscattered data set for a region of the sample or the different sample, determining the statistical electron characteristic of the data set, and estimating the thickness of the sample or the different sample in that region by inputting the determined statistical electron characteristic to the thickness function with the determined parameters of the thickness function.

The thickness function may be one of, or may be based on one of, a linear function, a logarithmic function, an exponential function or a polynomial function.

The sample may comprise one of a layer or a film deposited on a substrate, a free-standing film or a free-standing membrane. The sample may have a constant spatial crystal orientation.

The known thicknesses may be obtained from one or more of simulations, prior tests, and a database of known crystalline sample thicknesses.

The step of obtaining the electron backscattered data may comprise directing the electron beam to be incident upon a first region of the sample, determining the number of backscattered electrons detected by each pixel of the array for the first region of the sample, generating a first data set comprising the number of backscattered electrons detected by each pixel of the array for the first region of the sample, moving the electron beam to be incident upon a second region of the sample, determining the number of electrons detected by each pixel of the array for the second region of the sample, and generating a second data set comprising the number of backscattered electrons detected by each pixel of the array for the second region of the sample.

The step of determining, for each data set, the respective statistical electron characteristic may comprise determining a first statistical electron characteristic for the first data set and determining a second statistical electron characteristic for the second data set.

The step of fitting the known thicknesses and the determined statistical electron characteristic to the thickness function to determine the parameters of the thickness function may comprise fitting a first known thickness and the corresponding first statistical electron characteristic, and a second known thickness and the corresponding second statistical electron characteristic, to the thickness function to determine the parameters of the thickness function. Here, the first known thickness is the known thickness of the sample at the first region, and the second known thickness is the known thickness of the sample at the second region.

In a second aspect, there is a computer program comprising instructions that, when the computer program is executed by a computer, cause the computer to carry out the method described above.

In a third aspect, there is a system for determining parameters of a thickness function for estimating the thickness of a sample. The thickness function defines a relationship between the thickness of the sample and a statistical electron characteristic. The system comprises an electron beam generator configured to provide an electron beam towards a sample, a sample holder configured to hold the sample, a direct charged particle detector comprising an array of pixels and configured to count the number of backscattered electrons detected by each pixel of the array, and a processing device communicatively coupled to the direct charged particle detector and configured to perform the method described above.

The invention is defined in appended independent claims 1, 14 and 15.

### BRIEF DESCRIPTION OF THE DRAWINGS

In order that the invention can be more readily understood, reference will now be made, by way of example only, to the accompanying drawings in which:
Figure 1 illustrates exemplary samples of interest.
Figure 2 illustrates an exemplary thickness estimation system for estimating the thickness of a sample, wherein the system has a standard EBSD geometry.
Figure 3 illustrates another exemplary thickness estimation system for estimating the thickness of a sample, wherein the system has a reflection Kikuchi diffraction geometry.
Figure 4 illustrates a method of determining parameters of a thickness function for estimating a thickness of a sample.
Figure 5 illustrates a graph of the average electron counts for different elements.
Figure 6 illustrates the variation in average electron count for a sample of varying thickness across its length.
Figure 7 illustrates exemplary electron interaction volumes for a sample.
Figure 8 illustrates an exemplary method for obtaining the data for use in the method of figure 4.
Figure 9a illustrates an exemplary method of estimating the thickness of a sample.
Figure 9b illustrates an exemplary sample for use in the thickness estimation method of figure 9a.
Figure 9c illustrates exemplary data sets determined using the thickness estimation method of figure 9a, the data sets indicating the counted number of backscattered electrons for regions of the sample of figure 9b.
Figure 9d illustrates exemplary average electron counts for regions of the sample of figure 9b determined using the thickness estimation method of figure 9a.
Figure 10 illustrates an exemplary 2D colour map of estimated layer thickness and a corresponding line graph showing a 'cut' through of the 2D colour map.

### DETAILED DESCRIPTION OF THE INVENTION

An aim of the present invention is to improve methods and systems for estimating thicknesses of samples, in particular, but not limited to, samples that may form parts of a semiconductor component. The methods and systems are also applicable to fields such as 2D materials and material science. For example, a sample may comprise a thin layer or film deposited on a substrate, or a sample may comprise a free-standing film or free-standing membrane. As an example, most commonly the thin layer or film may be tungsten diselenide, molybdenum diselenide or magnesium oxide, but it may also be comprised of many other materials. The substrate may be comprised of silicon, silicon nitride, silicon carbide or another suitable material.

A thin layer/film or membrane is a layer of material with a thickness in the range of one atomic layer to many atomic layers, for example from less than 1 nm to several µm. Usually, the thin layer/film is deposited or grown on a substrate using a process such as chemical vapour deposition (CVD), spluttering or electron beam evaporation. Such processes are well known in the art and so are not explained in further detail here for brevity.

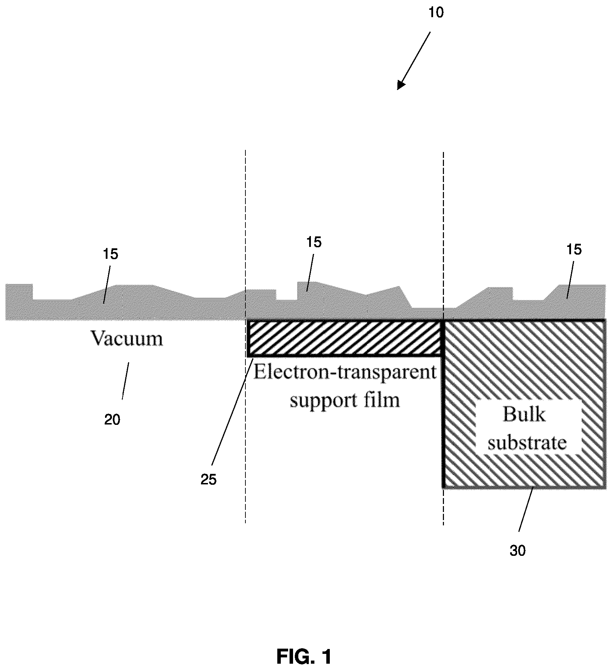

Figure 1 illustrates exemplary samples of interest 10 with varying thicknesses. Samples 10 includes a thin layer 15 that has gradual and abrupt changes in thickness. The thin layer 15 may be free-standing in a vacuum 20 (left hand side of figure 1), be deposited on an electron transparent support film 25 (centre of figure 1), or be deposited on a bulk substrate 30 (right hand side of figure 1).

As previously discussed, layer/film thickness is a key factor in assessing the quality of semiconductor components. However, achieving accurate thickness measurements of such layers/films can be challenging. Electron backscattered diffraction is a well-known technique for characterising the crystallographic structure of samples, such as thin layers/films. Advantageously, using electron backscattered data obtained from such samples can help improve the accuracy of thickness determination of the samples (and other samples of the same chemical composition).

Conventional indirect electron backscattering detectors have specific brightness and gain settings tailored to the detector that make it difficult to set up the same experimental settings each time. As such, results often vary with the different brightnesses and gains. It is possible to compare the recorded signals to one another, but an assumption must be made that the detector response is linear, which is not always the case.

In contrast, the below-described thickness estimation method of the present invention make use of direct electron detection (i.e., the number of detected electrons and/or their energies measured by the detector), instead of brightness and gain. This method is independent of the brightness and gain settings and so it is possible to obtain a more accurate and precise level of signal, resulting in improved thickness estimations that are more accurate and repeatable.

### Thickness estimation system

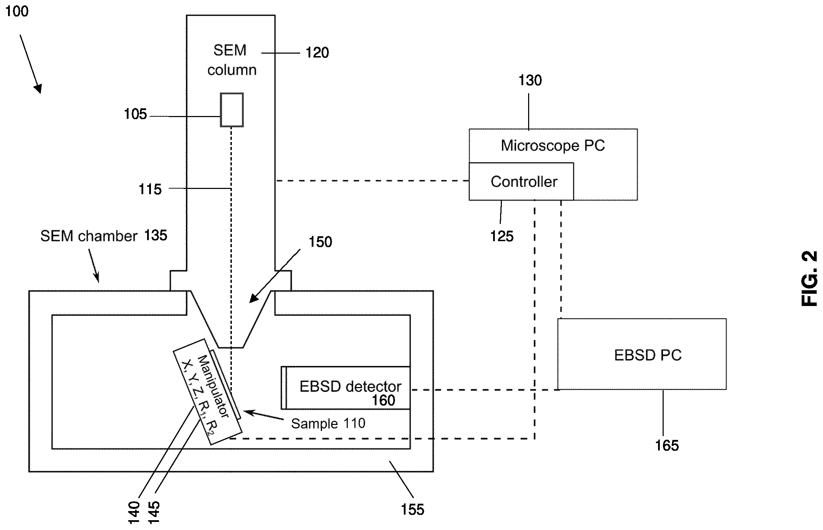

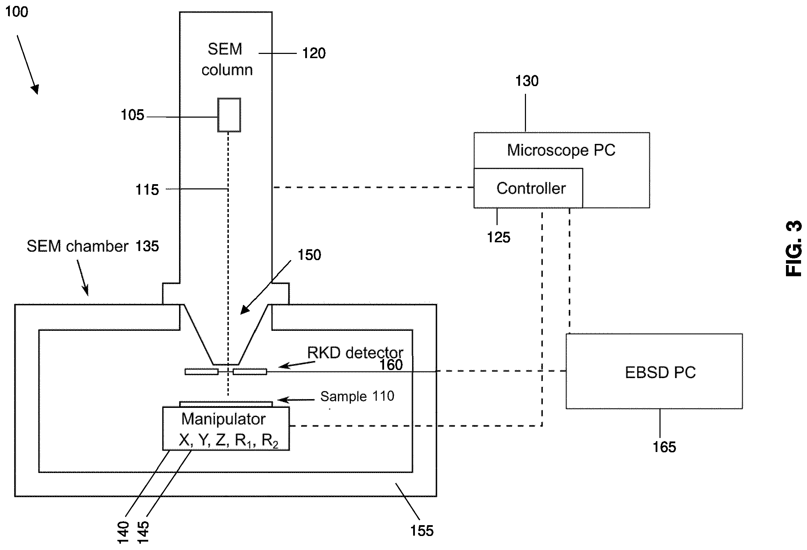

Figures 2 and 3 illustrate exemplary thickness estimation systems 100 for determining the thickness of a sample 110. System 100 obtains backscattered electron data that can be used to characterise the sample 110 and determine thickness measurements. As discussed above, the sample 110 may be a thin layer or film deposited on a substrate, or a free-standing film or free-standing membrane. Other suitable types of samples may also be used. The sample may have a constant spatial crystal orientation or the sample's crystal orientation may vary in space. In the latter case, the variation in orientation can be compensated for by use of a known relationship between crystal orientation and amount of backscattered electrons. If this relationship is known (for example, a [100] crystal orientation produces 80% of electrons, and a [111] crystal orientation produces 110% electrons from the mean value), then an electron backscattering detector can be used identify if the crystal orientation is [100] or [111] and software can adjust the value based on this relationship. In cases where the sample comprises a thin layer/film on a substrate, the layer/film may have a constant or varying spatial crystal orientation, and the substrate may have a single crystalline structure or an amorphous structure.

The system 100 comprises an electron beam source 105 that provides a beam of monochromatic, or substantially monochromatic, electrons towards the sample 110, along a beam axis 115. The beam of electrons may instead be non-monochromatic, but the obtained data will be less precise. The electrons may have an energy selected from a range of energies, e.g., an energy between 3 - 50 keV. The electron source 105 may be included in an electron beam column 120 as part of a scanning electron microscope (SEM) setup. The electron beam column 120 is configured to adjust the electron beam to focus to a point on the sample 110 and to scan the electron beam over the whole surface of the sample 110, for example line by line or section by section. A controller 125 in communication with the electron beam column 120 controls the movement of the electron beam, and start/stopping of the electron beam. The controller 125 may be part of a SEM computer 130.

A chamber 135, typically a vacuum chamber, houses a sample holder 140. The sample holder 140 may be part of a manipulator 145 that is used to translate and rotate the sample 110 into a desired position and orientation. In this way, the sample 110 may be placed in a selectable angle relative to the beam axis 115, for example, at 70 degrees to the beam axis 115. In other examples, the angle may be between 0 and 80 degrees. The electron beam column 120 is aligned with an aperture 150 in the chamber housing 155 to allow the beam of electrons to pass into the chamber 135 and contact the sample 110.

The system 100 also comprises a directed charged particle detector 160, such as a direct electron detector, positioned within the chamber 135 that is configured to directly detect electrons scattered from the sample 110. Such direct charged particle detectors, e.g., a direct electron detector, are able to directly count the number of, and/or measure the energies of, backscattered electrons from the sample 110, On the other hand, indirect electron detectors (e.g., those with a scintillator) do not have the ability to directly count the number of, nor measure the energies of, backscattered electrons. In other words, the direct charged particle detector 160 directly detects the electrons that have undergone an interaction with the sample 110 without any intermediary steps (i.e., there is no scintillator). A signal representative of the scattered electrons is acquired by the direct charged particle detector 160 and sent to a processing device for processing. In this embodiment, the processing device comprises a computer system including a computer 165 and/or a field-programmable gate array and/or an application-specific integrated circuit (ASIC). In the following description, the processing device is described as comprising the computer 165.

In some examples, the system 100 is set up in a standard EBSD geometry, as shown in figure 2, where the direct charged particle detector 160 is positioned to the side of the sample 110 and the sample 110 is tilted at an angle, e.g., at 70 degrees. In other examples, as shown in figure 3, the system 100 is set up in a reflection Kikuchi diffraction (RKD) geometry, where the direct charged particle detector 160 is positioned directly below the pole piece and parallel with the sample 110.

The direct charged particle detector 160 may comprise a front-end (not shown) configured to process the acquired signal into data. The front-end may pre-process the data and send to the computer 165 for further processing. The front-end can also provide power to the direct charged particle detector 160 and handles cooling, if necessary. The direct charged particle detector 160 may also comprise a feedthrough (not shown) through which are routed the communication links that allow the data transfer from the chamber 135 to the computer 165.

The direct charged particle detector 160 also includes a detector chip 180 that comprises a semiconductor sensor chip (e.g., a silicon chip) bonded to an electronic readout chip. The semiconductor sensor chip includes an array of pixels, e.g., 256 x 256 pixels or 512 x 448 pixels. Examples of such detector chips 180 include the Timepix 1 and the Timepix 2 (see https://indico.cern.ch/event/895924/contributions/4020698/attachments/ 2119022/3565847/Vertex2020MC.pdf ), the Timepix3 (see https://kt.cern/technologies/ timepix3) and the Timepix4 (see https://indico.cern.ch/event/591299/contributions/2423187/ attachments/1393307/2123191/Timepix4_specs.pdf and https://cds.cern.ch/record/2825 271), which are available from ADVACAM (https://advacam.com/), ASI (https://www.am scins.com/index.html), and Quantum Detectors (https://quantumdetectors.com/). Another example of a direct charged particle detector 160 is the Electron Microscope Pixel Array Detector, EMPAD (https://assets.thermofisher.com/TFS-Assets/MSD/Datasheets/EMPAD-Datasheet.pdf).

Some direct charged particle detectors 160, for example those including the Timepix 1 - 4 chips, can operate in a counting mode that counts each electron incident on the pixels as 1. The counting mode is frame-based, i.e., the electron counts for each of the pixels are collected in a predefined time interval, a frame, and the count for each pixel is read out at the end of the frame. Thus, the readout from each pixel describes how many electrons were counted in the timeframe over which the readout was collected.

Other direct charged particle detectors 160, for example those including the Timepix3 or Timepix4 chips, can also operate in a data driven mode. In the data driven mode, information about the detected electrons is read out for each detected electron as and when the direct charged particle detector 160 detects the electron striking a pixel, rather than accumulating a total count for each pixel to be readout at the end of a frame. When operating in the data driven mode, these direct charged particle detectors 160 can measure the electron energy deposited in each pixel by each incident electron. As the electron strikes the pixel, the direct charged particle detector 160 measures a value that is proportional to the energy of the incident electron. This measured energy value is called the time over threshold (TOT) value, *E*. At the same time as measuring the time over threshold value, the direct charged particle detector 160 may also measure the detection time of the detected electron, for example the time of arrival, *t*, of the detected electron (i.e., the timestamp of when the electron struck the pixel). These measured data can be included in a vector *(x, t, E)* for each detected electron that also includes the pixel position x of the pixel that detected the electron.

The measured data for each detected electron are sent from the direct charged particle detector 160 to the computer 165 for processing. These data are sent after each and every electron strike when the direct charged particle detector 160 is operating in the data driven mode, i.e., information about each and every detected electron, such as the vector *(x, t, E),* is provided in real time to the computer 165. This is in contrast to the direct charged particle detector 160 operating in the counting mode, where information is sent as a full frame read-out after a set measurement time period.

The computer 165 is in communication with the direct charged particle detector 160, e.g., via the feedthrough 175, and receives the collected electron data for processing and analysis. The computer 165 comprises a processor and memory for storing computer readable instructions. The computer 165 may be any suitable computer configured to operate software for processing and analysing the data. Optionally, the field-programmable gate array (FPGA) may be in communication with the direct charged particle detector 160 and computer 165 for processing the received signal. In some examples, the computer 165 is configured to carry out the below-mentioned method steps. In other examples, the FPGA 185 is configured to carry out the method steps. The controller 125 may also be in communication with the computer 165 and/or FPGA so as to control the processing. The computer 165 may be a separate computer to the SEM computer 130 or may be part of the SEM computer 130. Whilst a SEM system setup is described above and shown in figures 2 and 3, the system may instead be another suitable type of system, such as transmission electron microscopy (TEM) or scanning transmission electron microscopy (STEM) systems.

### Thickness estimation method

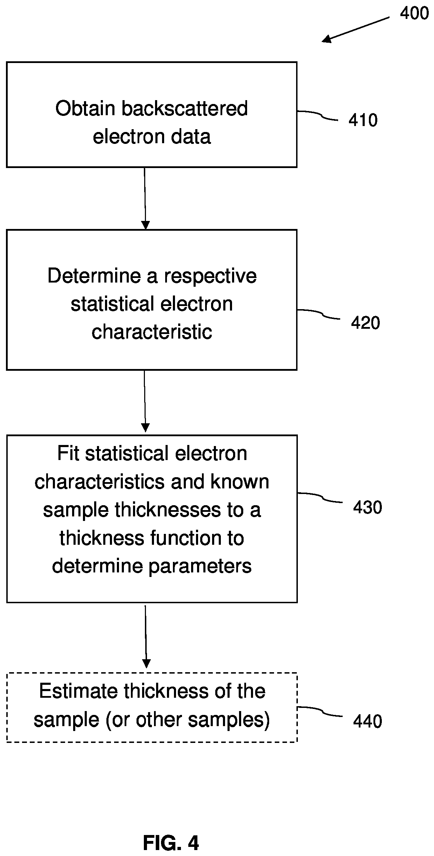

Figure 4 illustrates a method 400 of determining parameters of a thickness function for estimating a thickness of a sample, such as sample 110. The method 400 can be carried out using the thickness estimation system 100 described above, or using another suitable setup comprising a direct charged particle detector as described previously.

The method 400 enables thickness estimations by fitting known data to a thickness function. Parameters of the thickness function can be determined from the fitting and then used in the thickness function to estimate the thickness of the sample 110 at different regions of the sample 110, and/or to estimate the thickness of other samples (for example, other samples that have the same, or substantially the same, chemical composition as the sample that was used in the fitting process), as will be described in more detail below.

Backscattered electron data of the sample 110 is obtained 410 using the direct charged particle detector 160. An exemplary method 800 of obtaining this data is described below. As discussed, the direct charged particle detector 160 comprises an array of pixels and is configured to count the number of backscattered electrons (and/or to measure the energy of each backscattered electron) detected by each pixel of the array when the electron beam is incident upon the sample 110. The detected electrons are collected at the direct charged particle detector 160 as part of a signal and sent as data to the computer 165 for processing. The obtained backscattered electron data comprise a plurality of data sets. Each data set comprises the number of backscattered electrons detected by each pixel of the array when the electron beam is incident upon a respective region of the sample. For example, a first data set representative of a first region of the sample 110 comprises the number of backscattered electrons detected by each pixel of the array when the electron beam is incident upon the first region of the sample 110. Similarly, a second data set representative of a second region (that is different to the first region) of the sample 110 comprises the number of backscattered electrons detected by each pixel of the array when the electron beam is incident upon the second region of the sample 110, and so on across the different regions of the sample 110.

After obtaining 410 the backscattered electron data, a respective statistical electron characteristic is determined 420 for each data set. The determined statistical electron characteristic provides a statistical representation of the obtained electron data for varying regions of the sample 110. The determined statistical electron characteristic may be one of, or may be based on one of, a determined average electron count, a determined median electron count, a determined quantile electron count, or a total electron count.

In the case where the determined statistical electron characteristic is the determined average electron count, the determined average electron count describes the average value of the number of detected electrons that is determined from all of the pixels of the array when the electron beam is incident upon a region of the sample 110. The average value may be the mean average or the modal average. To determine the average electron count for a region of the sample, the number of backscattered electrons detected in each pixel of the array in a set measurement time period are first counted over the set measurement time period, and then an average (e.g., either mean average or modal average) for the whole array of pixels is calculated to provide an average electron count value representative of the electron backscattering from that region of the sample 110.

In the case where the determined statistical electron characteristic is the determined median electron count, the median electron count is determined in a similar way to the average electron count, but instead of calculating the mean or modal average value, the median value for the whole array of pixels is determined and provides a median electron count value representative of the electron backscattering from that region of the sample 110.

In the case where the determined statistical electron characteristic is the determined quantile electron count, the determined quantile electron count is determined by selecting one or more parts of a distribution representing the detected electrons. For example, a histogram of the obtained data from the whole array of pixels may be plotted to obtain the distribution of the electrons. Then, the histogram may be split into parts, e.g., four equal parts and any one of the first to fourth quartile used as the first to fourth quantile electron count value representative of the electron backscattering from that region of the sample 110. Using the determined quantile electron count, outliers can be excluded, leading to more accurate results.

In the case where the determined statistical electron characteristic is the determined total electron count, the total electron count describes the total value of the number of detected electrons determined from the whole array of pixels when the electron beam is incident upon that region of the sample 110. The total electron count for a region of the sample 110 is determined by counting the number of backscattered electrons detected in each pixel of the array in a set measurement time period, thereby providing a total value representative of the electron backscattering from that region of the sample 110.

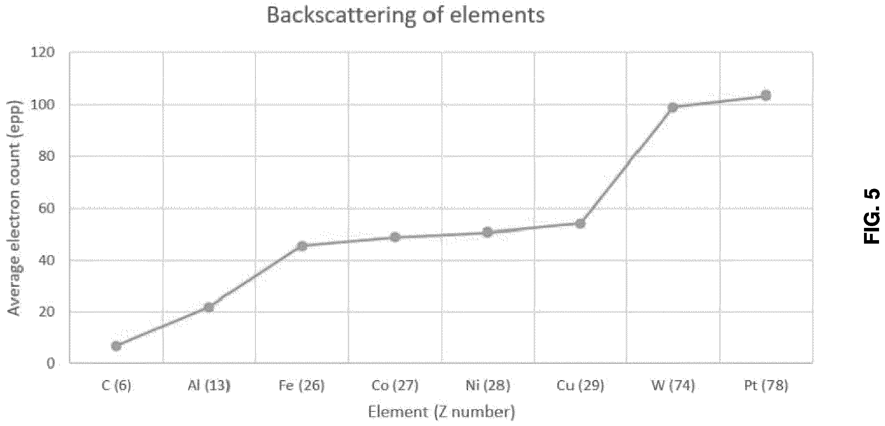

The determined statistical electron characteristic is dependent on both the chemical composition and the thickness of the sample 110. For example, different elements produce different amounts of backscattered electrons due to their varying atomic number. For example, elements with a higher atomic number produce more backscattered electrons. This is because samples with a higher atomic number have a higher density of particles, resulting in more electrons being scattered. Figure 5 illustrates the differences between average electron counts for varying elements of different atomic numbers. In particular, figure 5 shows the average electron count (*epp,* average electron per pixel) for different elements under the same EBSD experimental conditions - carbon, aluminium, iron, cobalt, nickel, copper, tungsten and platinum.

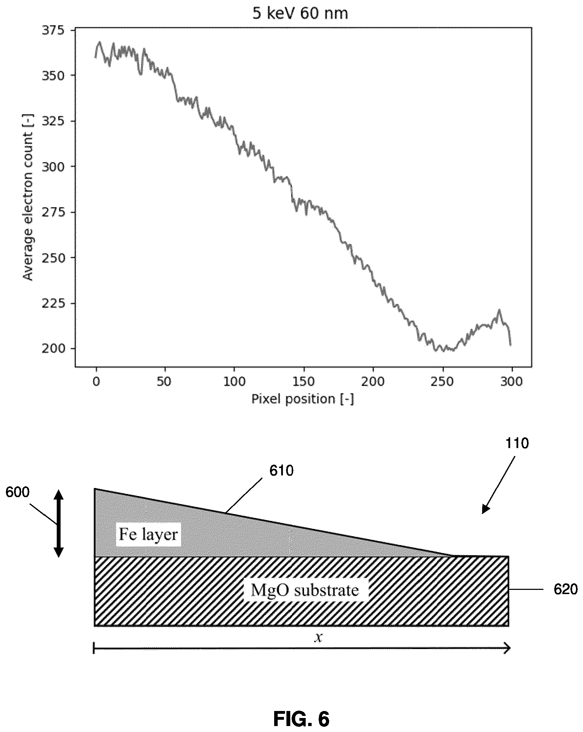

In addition, different thicknesses of a sample 110 result in different amounts of backscattered electrons due to the potential electron penetration depth into the sample 110. For example, incident electrons can penetrate further into a thicker sample 110. By travelling further into the sample 110, the backscattering probability is increased. Figure 6 illustrates the varying average electron count for a sample 110 of varying thickness. In this case, the sample 110 comprises a layer 610 of iron. This layer 610 is deposited on a substrate 620 of magnesium oxide and the electron backscattering was measured using a RKD system 100 setup (see figure 3 for example). The upper graph of figure 6 shows the average electron count (*epp,* average electron per pixel) across the length of the sample 110, in the direction of the arrow x. The lower figure of figure 6 shows the corresponding thickness 600 of the layer 610 changing across the same length of the sample 110. As can be seen, the layer 610 reduces in thickness 600 from the left hand side of the sample 110, and the average electron count decreases with this change in thickness. There is an increase in the average electron count around the 250th pixel position because the MgO substrate 620 is non-conductive and so the average electron count increases as electrons are trapped and radiate out instead of being conducted through. So in this case, there is an artefact.

To take advantage of the thickness dependency, a thickness function that defines a relationship between the thickness of the sample 110 and the determined statistical electron characteristic is used in the estimation. The thickness function can be any suitable function that relates the electron backscattered data (for example, the statistical electron characteristic) to the sample thickness. For example, the thickness function may be proportional or inversely proportional to the determined statistical electron characteristic. The thickness function may be, or be based on, a linear or non-linear function such as an exponential, logarithmic, and polynomial function etc. The thickness function can be user selectable. Any suitable function, or plurality of functions, can be chosen by the user for application to the backscattered electron data.

In one example, the thickness function is a linear function of the form *y = mx + c,* where *y* is the estimated thickness of the sample 110, *x* is the determined statistical electron characteristic, and *m* and *c* are the parameters of the thickness function. As mentioned, the thickness function could be another suitable function such as a quadratic function of the form *y = mx² + bx + c*, where *b* is also a parameter of the thickness function, or an exponential function of the form *y = mc^{x} + b,* or a logarithmic function of the form *y* = *mlog_{c}*(*x*)*.*

Once the respective statistical electron characteristic has been determined 420 for each data set, it is fitted 430 to the thickness function alongside known thicknesses of the sample 110 to determine the parameters of the thickness function. In more detail, in order to determine the parameters, two or more known thicknesses of the sample 110 at two or more respective regions of the sample 110 are needed for the fitting 430. In a simple example, the thickness of the sample 110 is known to be T_{A} located at region A of the sample 110, and the thickness of the sample 110 is known to be T_{B} located at region B (where region B is a different region to region A) of the sample 110. Electron backscattered data is obtained 410 at regions A and B (as explained in more detail below) and used to determine 420 the respective statistical electron characteristic, S_{A} and S_{B}, for regions A and B. These known values T_{A}, S_{A} and T_{B}, S_{B} are then fitted 430 to the thickness function, for example *y = mx + c*, to solve for the parameters *m* and *c*. More than two known thickness values of the same sample 110 can be used for the fitting 430. Additionally/alternatively, multiple thickness values of different samples 110 of the same chemical composition, or of substantially the same chemical composition, can be used in the fitting 430. For example, samples with chemical compositions within about 5% atomic weight of each other are considered to have the same, or substantially the same, chemical composition. In other examples, this percentage can be user-set, e.g., between about 1 - 5% of each other, or a higher/lower amount.

The known thickness values can be obtained in a variety of ways. For example, they can be determined prior to the fitting 430 using standard thickness measurement tests, such as cross-section measurement, lamellae extraction and transmission electron microscopy (TEM) measurement, Raman spectroscopy, and profilometry. Additionally or alternatively, the known thicknesses can be simulated, e.g., using Monte Carlo simulations, or taken from databases of known sample thicknesses.

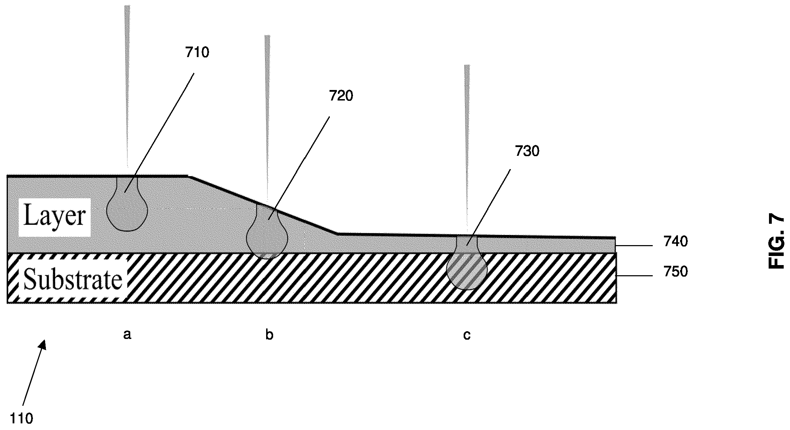

An important consideration in electron backscattering is the electron volume interaction size. This is because the electron interaction volume of the electron beam limits the size of sample 110 that may be investigated. The electron interaction volume is the volume within which electrons of the incident electron beam interact with the sample 110. Said in another way, this is the volume of the sample 110 that is affected by the incident electrons of the electron beam during a set measurement time period that the electron beam is incident on a region of the sample 110. Examples of various sized electron interaction volumes 710, 720, 730 are shown in figure 7 for a sample 110. The electron interaction volume size can be influenced by the electron beam spot size and/or energy, as well as the sample's chemical composition, crystal orientation and/or tilt (relative to the electron beam). For example, the electron interaction volume size can be increased/decreased by increasing/decreasing the voltage of the electron beam respectively.

For more accurate measurements, the electron interaction volume of the electron beam should be suitably sized so that the maximum depth from which the backscattered electrons (i.e., a backscattered signal) reach the direct charged particle detector 160 is greater than or equal to the thickness of the sample 110. For example, if the thickness of the sample 110 is known, or expected, to be 5 µm (e.g., based on prior experiments/reference data), then the electron interaction volume of the electron beam should be sized such that its depth is at least 5 µm, or thereabouts. This helps reveal the true thickness profile of the sample 110 in question. If the electron interaction volume is not large enough for the incident electrons to penetrate to all thicknesses of the sample of interest, then no data for the inaccessible parts will be produced, leading to an inaccurate thickness profile.

In cases where the sample 110 comprises a free-standing film or free-standing membrane (e.g., like the sample 10 on the left hand side of figure 1), the electron interaction volume should be suitably sized so that the maximum depth from which the backscattered electrons reach the direct charged particle detector 160 is greater than or equal to the maximum thickness of the free-standing film or free-standing membrane.

In cases where the sample 110 comprises a layer on a substrate (e.g., like the samples 110 of figures 6 and 7, as well as the sample 10 on the right hand side of figure 1), the electron interaction volume of the electron beam should be suitably sized so that the maximum depth from which the backscattered electrons reach the direct charged particle detector 160 is greater than or equal to the maximum thickness of the layer/film. This is because it is the layer thickness that is important (and of interest) in this scenario. For homogeneous substrates, the substrate thickness is not of importance, i.e., the electron interaction volume sizing is independent of the substrate thickness. As such, for more accurate results here it is enough that the electron interaction volume is sized so that the maximum depth from which the backscattered electrons reach the direct charged particle detector 160 is greater than or equal to the maximum thickness of the layer only. For example, in reference to the sample 110 of figure 7 comprising a layer 740 on a substrate 750, the electron interaction volume 710 at position a is not large enough for the incident electrons to penetrate all the way through the layer 740 at this position, leading to inaccurate electron backscattered data and an inaccurate thickness profile at position a. In contrast, the electron interactions volumes 720 and 730 at positions b and c are large enough to obtain accurate electron backscattered data and true thickness profiles because the electron interaction volumes span at least the entire thickness of the layer 740 at these positions. Whilst the setup of figure 7 generates accurate results at positions *b* and *c*, it is more advantageous to use an electron interaction volume that is sized so that the maximum depth from which the backscattered electrons reach the direct charged particle detector 160 is greater than or equal to the thickness of the layer 740 at the layer's 740 thickest point (i.e., the layer's maximum thickness, at position a) so as to avoid the issues mentioned above.

Once the parameters of the thickness function have been determined 430, they may be used to estimate 440 the thickness of the sample 110 (or other samples). For example, the (unknown) thickness of the sample 110 at a different region of the sample 110 may be estimated 440 based on the determined parameters of the thickness function and the determined statistical electron characteristic at that region.

Additionally or alternatively, the determined parameters of the thickness function may be used to estimate 440 the thickness of a different sample. In this case, the different sample is a sample that is distinct from the sample 110 used to determine the parameters of the thickness function, but that has the same, or substantially the same, chemical composition as the sample 110 used to determine the parameters of the thickness function. For example, if the thickness function parameters were determined using a copper sample, then thickness estimations 440 of a different copper sample can be made based on the determination 430 since the two samples have the same chemical composition and so the determined thickness function is representative of both samples. Samples with chemical compositions within about 5% atomic weight of each other are considered to have the same, or substantially the same, chemical composition. In other examples, this percentage can be user-set, e.g., between about 1 - 5% of each other, or a higher/lower amount. Advantageously, the ability to apply the determined thickness function to other samples of the same composition can be very useful, for example, where there is a batch collection of samples, e.g., a batch of newly manufactured semiconductor components. The thickness profile representative of all of the samples can be found from the fitting 430 on one individual semiconductor component using method 400 above. Since all of the components have the same composition, the determined thickness function can be considered to be the same for all of the components in the batch.

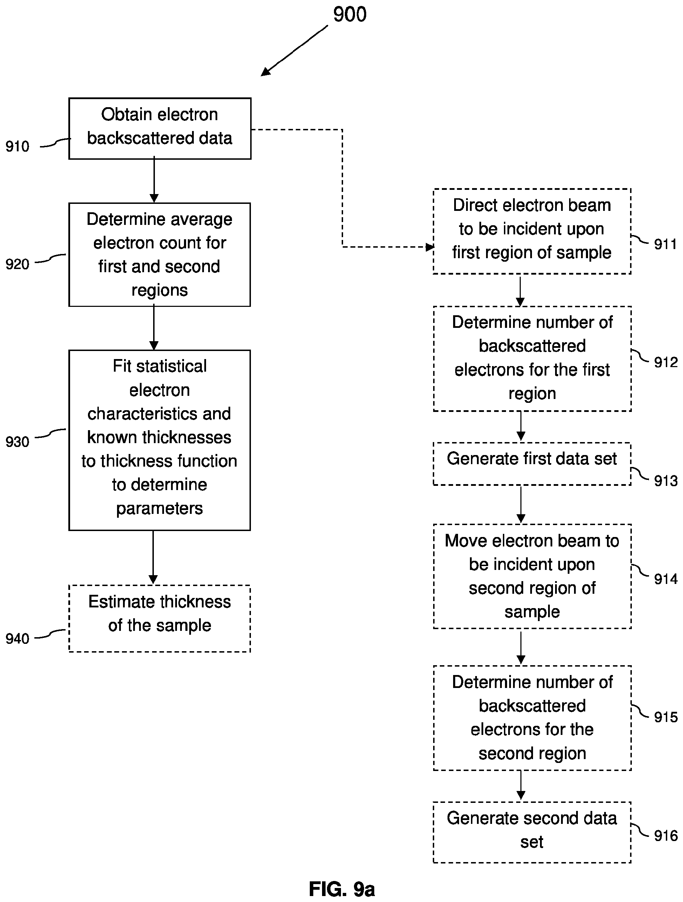

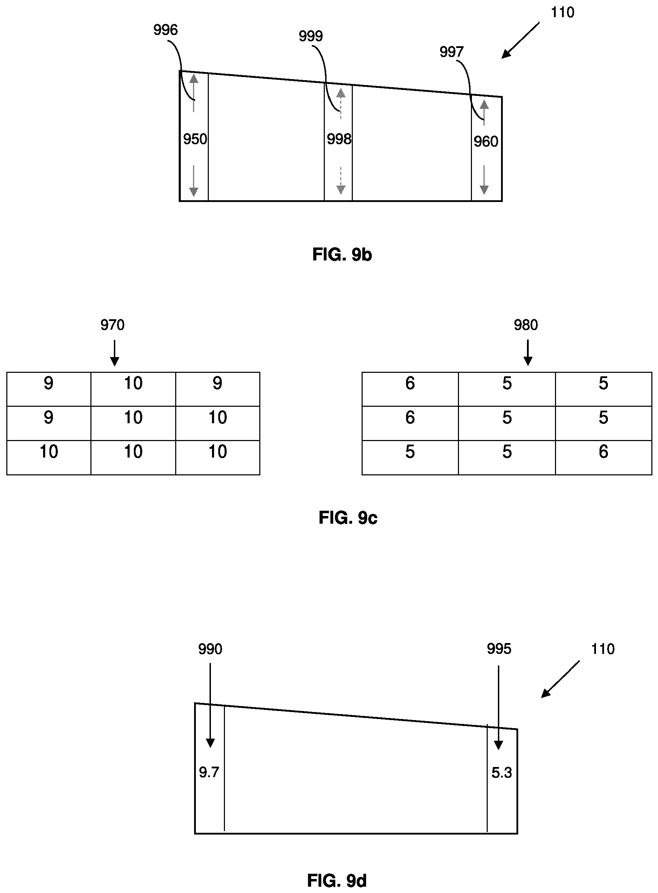

To estimate 440 the thickness of the sample 110 or the different sample, first an electron backscattered data set is obtained for a region of the sample 110 or the different sample (similar to step 410), and a statistical electron characteristic of the data set is determined (similar to step 420). From this, the thickness of the sample 110 or the different sample in that region can be estimated 440 by inputting the determined statistical electron characteristic to the thickness function alongside the determined parameters 430 of the thickness function. A specific example is described below with reference to figure 9.

### Obtaining backscattered electron data

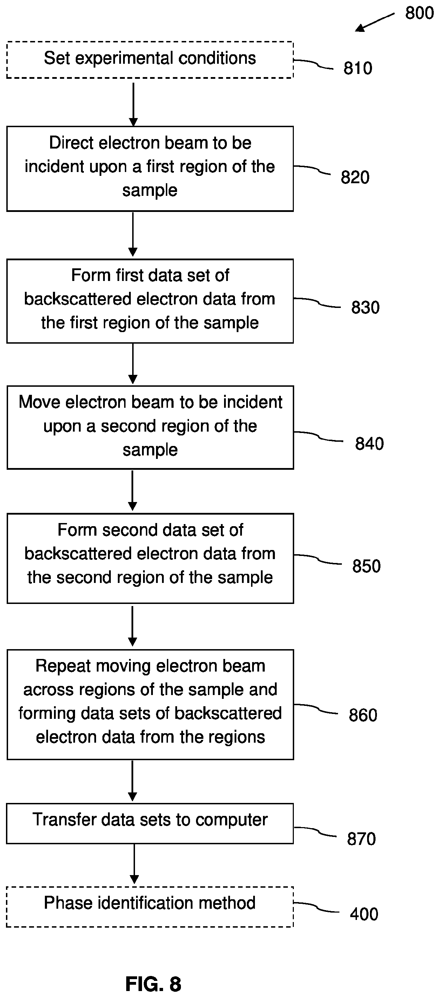

Figure 8 illustrates an exemplary method 800 for obtaining the data for use in the thickness measurement method 400 of figure 4. This method 800 can use direct electron counting and/or direct electron energy measurements, and can be carried out using the systems 100 shown in figures 2 and 3, or using another suitable setup comprising a direct charged particle detector 160 as described previously. In particular, the direct charged particle detector must be capable of directly counting the number of detected electrons in each pixel of the detector array, i.e., operating in the 'counting' mode. The detector may also be capable of directly measuring the energies of detected electrons in each pixel of the detector array, i.e., operating in the 'time over threshold' mode.

Experimental conditions may be set 810 first in order to obtain 410 the electron backscattered data. For example, the sample of interest 110 is loaded into the sample holder 140 in the chamber 135 and set into the desired position and orientation by the manipulator 145. The electron beam column 120 is configured to move the electron beam into position under control of the controller 125 so as to align the electron beam and the sample 110 at a fixed angle. Other setup conditions may also be selected, e.g., electron beam voltage, electron beam current, sample-detector distance, map dimension and acquisition times, and applied.

The controller 125 initiates the electron beam to be directed 820 to be incident upon the sample 110. The electron beam is targeted at a first region of interest of the sample 110. For example, the surface of the sample 110 may be split into a grid of sections, with each region of interest being one or more sections of the grid. As the electron beam contacts the first region of the sample 110, some electrons from the beam are scattered towards the direct charged particle detector 160 at varying angles. Scattered electrons strike the pixels of the direct charged particle detector 160 forming a signal that can then be sent from the direct charged particle detector 160 to the computer 165 for processing. In direct electron counting examples, the direct charged particle detector 160 counts the number of electrons detected in each pixel over a set measurement time period, for example a time period between 0.1 - 200 ms, such as 0.5 ms, forming 830 a first data set representative of the electron backscattering from the first region of the sample 110.

After scanning the first region for the set measurement time period, the electron beam is moved 840 by the controller 125 to a second region of interest of the sample 110 and the data are collected in the same manner while the electron beam is incident on the second region. In other words, the direct charged particle detector 160 counts the number of electrons detected in each pixel over the set measurement time period, forming 850 a second data set representative of the electron backscattering from the second region of the sample 110. This process continues until all of, or at least a part of, the sample 110 has been scanned 860. Usually, the electron beam is scanned across tens of thousands to millions of regions of the sample 110.

The data sets are transferred 870 to the computer 165 for processing, and the thickness measurement method 400 can be used to estimate thicknesses of samples, as described above and below.

### Exemplary thickness estimation method

A more detailed exemplary method 900 of the method 400 of figure 4 is shown in figure 9a. In this example, the method 900 use the (mean or modal) average electron count as the statistical electron characteristic. However, this method 900 works in exactly the same way when using the median electron count, the quantile electron count or the total electron count as the statistical electron characteristic and so, for brevity, these versions are not described here. It is to be noted that the average electron count can simply be replaced by the median electron count, the quantile electron count or the total electron count in each step below and a similar result would be achieved. Similarly, measured energies of the directly detected electrons can be used instead of the statistical electron characteristic, as described later on.

In a first step of method 900, the electron backscattered data is obtained 910 from the sample 110, i.e., using the method 800 of figure 8 or another suitable method of obtaining the electron backscattering data. The electron beam is directed 911 to be incident upon a first region 950 of the sample 110 and the number of backscattered electrons detected by each pixel of the array for the first region 950 of the sample 110 is determined 912. As already discussed, the electron beam is incident on the first region 950 for a set measurement time period, for example 0.5 ms. A first data set 970 comprising the number of backscattered electrons detected by each pixel of the array for the first region 950 of the sample 110 over the set measurement time period is generated 913. The electron beam is them moved 914 to be incident upon a second region 960 of the sample 110, and the above steps are repeated: the number of electrons detected by each pixel of the array for the second region 960 of the sample 110 is determined 915, and a second data set 980 comprising the number of backscattered electrons detected by each pixel of the array for the second region 960 of the sample 110 over the set measurement time period is generated 916. Figure 9b illustrates exemplary sample 110 with first region 950 and second region 960 indicated. Examples of the data sets 970, 980 indicating the counted number of backscattered electrons detected in each pixel over the set measurement time period for the respective first and second regions 950, 960 are shown in figure 9c. Usually, in such electron backscattering experiments, hundreds of thousands to millions of regions are analysed. However, this exemplary method is described/shown for only a couple of the regions 950, 960 and with simplified values for the reader's ease of understanding and for brevity.

Next in the method 900, a first average electron count 990 for the first data set 970 and a second average electron count 995 for the second data set 980 is determined 920. To determine the average electron counts 990, 995, an average across the whole array of pixels for each region 950, 960 is calculated. In this case, the mean average is calculated, but the modal average may be calculated instead. The mean average electron counts 990, 995 for the first and second regions 950, 960 are shown superimposed over the sample 110 in figure 9d. These mean average electron counts 990, 995 have values of 9.7 and 5.3 epp respectively. As mentioned above, the average electron count values could be directly replaced with any of the median/quantile/total electron count.

Following this step, the known thicknesses at the first and second regions 950, 960 (indicated by solid arrows 996 and 997 in figure 9b) and the determined statistical electron characteristics for the first and second regions 950, 960 (the first and second average electron counts 990, 995 are the statistical electron characteristics) are fitted 930 to the thickness function to determine the parameters of the thickness function. In more detail, the fitting 930 comprises fitting a first known thickness 996 of the sample 110 at the first region 950, and the corresponding first statistical electron characteristic 990 (i.e., the first average electron count 990), with a second known thickness 997 of the sample 110 at the second region 960, and the corresponding second statistical electron characteristic 995 ( i.e., the second average electron count 995), to the thickness function to determine the parameters of the thickness function. If the thickness function is a linear function of the form *y = mx* + *c*, where *y* is the thickness of the sample 110, *x* is the statistical electron characteristic, and *m* and *c* are the parameters of the thickness function, each known thickness 996, 997 and corresponding statistical electron characteristic 970, 980 is fitted 930 to the linear function to determine the parameters *m* and *c*. In this example, the known thicknesses 996, 997 are 5 µm and 2 µm (e.g., found from prior testing at the first and second regions), with corresponding determined statistical electron characteristics 990, 995 of 9.7 and 5.3. Fitting 930 these values to the linear equation produces the parameters *m* = *0.7*and *c = -1.6.*

Once the parameters of the thickness function have been determined, they may be used to estimate 940 the thickness of the sample 110 at a region 998 where the thickness is unknown, for example in region 998 of unknown thickness indicated by dashed arrow 999, and/or to estimate 940 the thickness of a different sample (which has the same chemical composition as the sample 110 used to determine the parameters of the thickness function). To estimate 940 the thickness 999 of the sample 110 or the different sample, first an electron backscattered data set is obtained at the unknown region 998 of the sample 110 or the different sample (similar to step 910). A statistical electron characteristic of the data set is determined (similar to step 920), and from this, the thickness 999 in that region 998 can be determined 940 by inputting the determined statistical electron characteristic to the thickness function with the determined parameters 930 of the thickness function, i.e., *y = 0.7x - 1.6*, where *x* is the determined statistical electron characteristic for that unknown thickness region 998.

The above methods are explained in relation to regions positioned along the length of the sample 110, e.g., how thickness (z axis) changes along the length direction (x axis) of the sample 110. These methods may also make use of the thickness changes in the perpendicular width direction (y axis) of the sample 110, i.e., to account for thickness changes in the width direction (y axis). In this case, the methods are the same except that regions are positioned along the width of the sample 110, rather than the length.

In addition, these methods can be used to account for thickness changes in both the length and width directions. This can be done by producing a map that is representative of the sample's estimated thickness in the x-y plane directions. The region(s) of interest of the sample 110 are split into multiple sections and each section is separately fitted to a line or other suitable function. Each fitting can then be combined in order to reveal the thickness profile map across the x-y plane.

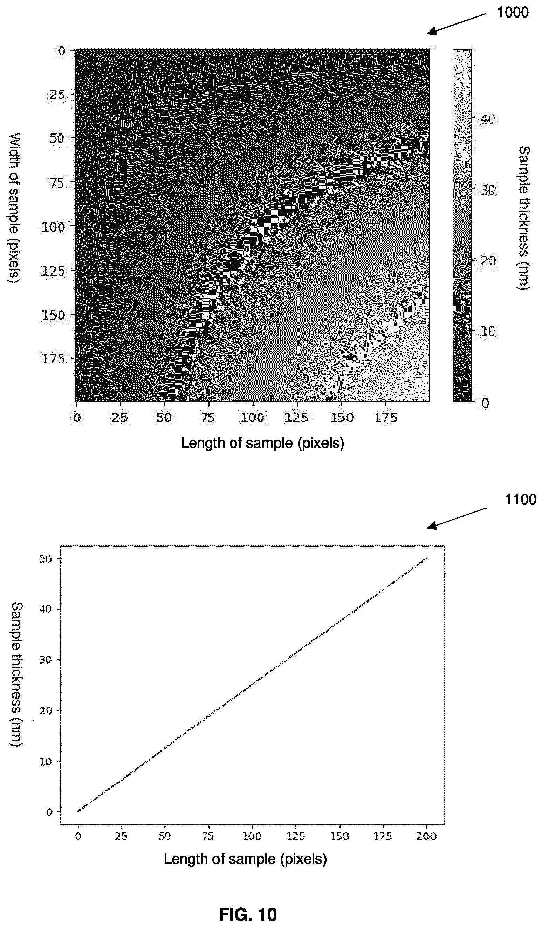

Figure 10 illustrates an exemplary 2D colour map 1000 representing the measured thickness of a sample 110 in the x-y plane and a corresponding line graph 1100 showing a 'cut' through of the colour map 1000 along the x axis. The x and y axes of map 1000 are the length and width of the sample in the x-y plane, and the colour bar indicates the thickness of the sample 110 (in the z axis). As can be seen from figure 10, the map 1000 shows a zero sample thickness in the bottom left, top left and top right corners (darkest shading), and shows a gradually increasing thickness towards the bottom right corner (lightest shading) where the sample thickness reaches 50 nm. The line graph 1100 represents a 'cut' through along the x axis of the map 1000, showing the linear increase in sample thickness from the bottom left pixel to the bottom right pixel of map 1000. The x axis is the length of the sample, and the y axis defines the sample thickness.

### Thickness estimation methods using direct electron energies

The above descriptions primarily discuss the use of direct electron counting in thickness measurement methods. However, in other examples, direct measurements of the energies of detected electrons by the direct charged particle detector 160 can be used (additionally or alternatively to the direct electron counting) in the thickness measurement methods. For example, instead of counting the number of detected electrons per pixel, the methods could comprise measuring the energy of each electron detected per pixel, or measuring a value proportional to the energy of each detected electron per pixel. Then, an average electron energy value for each region could be determined (similar to the mean average electron example described above), or the median or quantile energy value. Such values could be used in the thickness function parameters determination step 430, 930, where the thickness function defines a relationship between the thickness of the sample 110 and an electron energy characteristic (i.e., the mean/median/quantile electron energy value).

Although specific embodiments have now been described, the skilled person will understand that various modifications and variations are possible without departing from the scope of the present invention that is defined by the appended claims.

## Claims

1. A method of determining parameters of a thickness function for estimating a thickness of a sample (110), the thickness function defining a relationship between the thickness of the sample (110) and a statistical electron characteristic, the method comprising:
obtaining backscattered electron data of the sample (110) using a direct charged particle detector (160) comprising an array of pixels and configured to count the number of backscattered electrons detected by each pixel of the array when an electron beam (115) is incident upon the sample (110), the backscattered electron data comprising data sets, the data sets comprising the number of backscattered electrons detected by each pixel of the array when the electron beam is incident upon a respective region of the sample (110), and the thickness of the sample (110) at each respective region being known;
determining, for each data set, a respective statistical electron characteristic; and
fitting the known thicknesses and the determined statistical electron characteristics to the thickness function to determine the parameters of the thickness function.

2. The method of claim 1, wherein an electron interaction volume of the electron beam is sized so that the maximum depth from which the backscattered electrons reach the direct charged particle detector is greater than or equal to a maximum thickness of the sample, and wherein the electron interaction volume is the volume within which electrons of the incident electron beam interact with the sample.

3. The method of claim 1 or claim 2, wherein the determined statistical electron characteristic is one of, or based on one of: a determined average electron count, a determined median electron count, a determined quantile electron count or a determined total electron count, and optionally, wherein:
the determined average electron count is the average value determined from all of the pixels of the array when the electron beam is incident upon a region of the sample;
the determined median electron count is the median value determined from all of the pixels of the array when the electron beam is incident upon a region of the sample;
the determined quantile electron count is a selected quantile value determined from all of the pixels of the array when the electron beam is incident upon a region of the sample; and
the determined total electron count is the total value determined from all of the pixels of the array when the electron beam is incident upon a region of the sample.

4. The method of any preceding claim, wherein the thickness function defines that the determined statistical electron characteristic increases with sample thickness.

5. The method of any preceding claim, further comprising estimating the thickness of the sample at a region of the sample based on the determined parameters of the thickness function and the determined statistical electron characteristic at that region.

6. The method of any preceding claim, further comprising estimating the thickness of a different sample at a region of the different sample based on the determined parameters of the thickness function and the determined statistical electron characteristic at that region of the different sample, the different sample having the same, or substantially the same, chemical composition as the sample.

7. The method of claim 5 or claim 6, wherein estimating the thickness of the sample or the different sample at a region of the sample or the different sample comprises:
obtaining an electron backscattered data set for a region of the sample or the different sample;
determining the statistical electron characteristic of the data set;
estimating the thickness of the sample or the different sample in that region by inputting the determined statistical electron characteristic to the thickness function with the determined parameters of the thickness function.

8. The method of any preceding claim, wherein the thickness function is one of, or is based on one of: a linear function, a logarithmic function, an exponential function or a polynomial function.

9. The method of any preceding claim, wherein the sample comprises one of:
a layer or a film deposited on a substrate;
a free-standing film; or
a free-standing membrane.

10. The method of any preceding claim, wherein the known thicknesses are obtained from one or more of: simulations, prior tests, and a database of known crystalline sample thicknesses.

11. The method of any preceding claim, wherein obtaining the electron backscattered data comprises:
directing the electron beam to be incident upon a first region of the sample;
determining the number of backscattered electrons detected by each pixel of the array for the first region of the sample;
generating a first data set comprising the number of backscattered electrons detected by each pixel of the array for the first region of the sample;
moving the electron beam to be incident upon a second region of the sample;
determining the number of electrons detected by each pixel of the array for the second region of the sample; and
generating a second data set comprising the number of backscattered electrons detected by each pixel of the array for the second region of the sample.

12. The method of claim 11, wherein determining, for each data set, the respective statistical electron characteristic comprises determining a first statistical electron characteristic for the first data set and determining a second statistical electron characteristic for the second data set.

13. The method of claim 12, wherein fitting the known thicknesses and the determined statistical electron characteristic to the thickness function to determine the parameters of the thickness function comprises:
fitting a first known thickness and the corresponding first statistical electron characteristic, and a second known thickness and the corresponding second statistical electron characteristic, to the thickness function to determine the parameters of the thickness function,
wherein the first known thickness is the known thickness of the sample at the first region, and the second known thickness is the known thickness of the sample at the second region.

14. A computer program comprising instructions that, when the computer program is executed by a computer, cause the computer to carry out the data processing steps of the method of any preceding claim.

15. A system for determining parameters of a thickness function for estimating the thickness of a sample (110), the thickness function defining a relationship between the thickness of the sample (110) and a statistical electron characteristic, the system comprising:
an electron beam generator (105) configured to provide an electron beam (115) towards a sample (110);
a sample holder (140) configured to hold the sample (110);
a direct charged particle detector (160) comprising an array of pixels and configured to count the number of backscattered electrons detected by each pixel of the array; and
a processing device (165) communicatively coupled to the direct charged particle detector (160) and configured to perform the data processing steps of the method of any one of claims 1 - 13.

## Patentansprüche

1. Verfahren zum Bestimmen von Parametern einer Dickenfunktion zur Abschätzung einer
Dicke einer Probe (110),
wobei die Dickenfunktion einen Zusammenhang zwischen der Dicke
der Probe (110) und einer statistischen Elektronencharakteristik definiert, wobei das Verfahren Folgendes umfasst:
Erfassen von Rückstreuelektronendaten der Probe (110) unter
Verwendung eines
Detektors für direkt geladene Teilchen (160),
der eine Pixelanordnung umfasst und so konfiguriert ist, dass er die Anzahl der von jedem Pixel der Anordnung erfassten Rückstreuelektronen zählt, wenn ein Elektronenstrahl (115)
auf die
Probe (110) auftrifft,
wobei die Rückstreuelektronendaten Datensätze umfassen, wobei die Datensätze die Anzahl der von jedem Pixel der Anordnung erfassten Rückstreuelektronen umfassen, wenn der Elektronenstrahl auf einen jeweiligen Bereich der Probe (110) auftrifft,
und wobei die Dicke der Probe (110) für jeden jeweiligen Bereich bekannt ist;
Ermitteln einer jeweiligen statistischen Elektronencharakteristik für jeden Datensatz; und
Anpassen der bekannten Dicken und der ermittelten statistischen Elektronencharakteristiken an die Dickenfunktion, um die Parameter der Dickenfunktion zu bestimmen.

2. Verfahren nach Anspruch 1, wobei ein Elektronenwechselwirkungsvolumen des Elektronenstrahls so bemessen ist, dass die maximale Tiefe, aus der die rückgestreuten Elektronen den Detektor für direkt geladene Teilchen erreichen, größer oder gleich einer maximalen Dicke der Probe ist, und wobei das Elektronenwechselwirkungsvolumen das Volumen ist, innerhalb dessen Elektronen des einfallenden Elektronenstrahls mit der Probe wechselwirken.

3. Verfahren nach Anspruch 1 oder Anspruch 2, wobei die ermittelte statistische Elektronencharakteristik eine der folgenden Größen ist oder auf einer der folgenden Größen basiert:eine ermittelte durchschnittliche Elektronenzahl, eine ermittelte mediane Elektronenzahl, eine ermittelte Quantil-Elektronenzahl oder eine ermittelte Gesamtelektronenzahl, und wobei gegebenenfalls:
die ermittelte durchschnittliche Elektronenzahl der Mittelwert ist, der aus allen Pixeln der Anordnung ermittelt wird, wenn der Elektronenstrahl auf einen Bereich der Probe auftrifft;
die ermittelte mediane Elektronenzahl der Medianwert ist, der aus allen Pixeln der Anordnung bestimmt wird, wenn der Elektronenstrahl auf einen Bereich der Probe auftrifft;
die ermittelte Quantil-Elektronenzahl ein ausgewählter Quantilwert ist, der aus allen Pixeln der Anordnung ermittelt wird, wenn der Elektronenstrahl auf einen Bereich der Probe auftrifft; und
die ermittelte Gesamtelektronenzahl der Gesamtwert ist, der aus allen Pixeln der Anordnung bestimmt wird, wenn der Elektronenstrahl auf einen Bereich der Probe auftrifft.

4. Verfahren nach einem der vorangegangenen Ansprüche, wobei die Dickenfunktion definiert, dass die ermittelte statistische Elektronencharakteristik mit der Probendicke zunimmt.

5. Verfahren nach einem der vorangegangenen Ansprüche, das ferner das Schätzen der Dicke der Probe in einem Bereich der Probe auf der Grundlage der ermittelten Parameter der Dickenfunktion und der ermittelten statistischen Elektronencharakteristik in diesem Bereich umfasst.

6. Verfahren nach einem vorangegangenen Anspruch, das ferner das Schätzen der Dicke einer anderen Probe in einem Bereich dieser anderen Probe auf der Grundlage der ermittelten Parameter der Dickenfunktion und der ermittelten statistischen Elektronencharakteristik in diesem Bereich der anderen Probe umfasst, wobei die andere Probe dieselbe oder im Wesentlichen dieselbe chemische Zusammensetzung wie die Probe aufweist.

7. Verfahren nach Anspruch 5 oder Anspruch 6, wobei das Schätzen der Dicke der Probe oder der anderen Probe in einem Bereich der Probe oder der anderen Probe umfasst:
Erhalten eines Datensatzes von rückgestreuten Elektronen für einen Bereich der Probe oder der anderen Probe;
Ermitteln der statistischen Elektronencharakteristik des Datensatzes;
Schätzen der Dicke der Probe oder der anderen Probe in diesem Bereich durch Eingabe der ermittelten statistischen Elektronencharakteristik in die Dickenfunktion mit den ermittelten Parametern der Dickenfunktion.

8. Verfahren nach einem der vorangegangenen Ansprüche, wobei die Dickenfunktion eine der folgenden ist oder auf einer der folgenden basiert: eine lineare Funktion, eine logarithmische Funktion, eine exponentielle Funktion oder eine polynomiale Funktion.

9. Verfahren nach einem der vorangegangenen Ansprüche, wobei die Probe eine der folgenden Formen aufweist:
eine auf einem Substrat abgeschiedene Schicht oder einen Film;
ein freistehender Film; oder
eine freistehende Membran.

10. Verfahren nach einem der vorangegangenen Ansprüche, wobei die bekannten Dicken aus einem oder mehreren der folgenden Quellen gewonnen werden: Simulationen, früheren Tests und einer Datenbank bekannter Dicken kristalliner Proben.

11. Verfahren nach einem der vorangegangenen Ansprüche, wobei das Ermitteln der Daten zur Elektronenrückstreuung Folgendes umfasst:
Richten des Elektronenstrahls dergestalt, dass er auf einen ersten Bereich der Probe auftrifft;
Ermitteln der Anzahl der von jedem Pixel der Anordnung für den ersten Bereich der Probe erfassten rückgestreuten Elektronen;
Erzeugen eines ersten Datensatzes, der die Anzahl der von jedem Pixel der Anordnung für den ersten Bereich der Probe erfassten rückgestreuten Elektronen umfasst;
Bewegen des Elektronenstrahls, sodass er auf einen zweiten Bereich der Probe auftrifft;
Ermitteln der Anzahl der von jedem Pixel der Anordnung für den zweiten Bereich der Probe erfassten Elektronen; und
Erzeugen eines zweiten Datensatzes, der die Anzahl der von jedem Pixel der Anordnung für den zweiten Bereich der Probe erfassten rückgestreuten Elektronen umfasst;

12. Verfahren nach Anspruch 11, wobei das Ermitteln der jeweiligen statistischen Elektronencharakteristik für jeden Datensatz das Ermitteln einer ersten statistischen Elektronencharakteristik für den ersten Datensatz und das Ermitteln einer zweiten statistischen Elektronencharakteristik für den zweiten Datensatz umfasst.

13. Verfahren nach Anspruch 12, wobei das Anpassen der bekannten Dicken und der ermittelten statistischen Elektronencharakteristik an die Dickenfunktion zum Ermitteln der Parameter der Dickenfunktion Folgendes umfasst:
Anpassen einer ersten bekannten Dicke und der entsprechenden ersten statistischen Elektronencharakteristik sowie einer zweiten bekannten Dicke und der entsprechenden zweiten statistischen Elektronencharakteristik an die Dickenfunktion, um die Parameter der Dickenfunktion zu ermitteln;
wobei die erste bekannte Dicke die bekannte Dicke der Probe im ersten Bereich ist und die zweite bekannte Dicke die bekannte Dicke der Probe im zweiten Bereich ist.

14. Ein Computerprogramm, das Anweisungen umfasst, die, wenn das Computerprogramm von einem Computer ausgeführt wird, den Computer veranlassen, die Datenverarbeitungsschritte des
Verfahrens gemäß einem der vorangegangenen
Ansprüche durchzuführen.

15. System zur Bestimmung von Parametern einer Dickenfunktion zur Abschätzung
der Dicke einer Probe (110),
wobei die Dickenfunktion eine Beziehung zwischen der Dicke der Probe (110) und einer statistischen Elektronencharakteristik definiert, wobei das System umfasst:
einen Elektronenstrahlgenerator (105), der so ausgelegt ist, dass er einen Elektronenstrahl (115) auf
eine Probe (110) richtet;
einen Probenhalter (140), der so ausgelegt ist, dass er die Probe (110) hält;
einen Detektor für direkt geladene Teilchen (160), der eine Pixelanordnung umfasst und so ausgelegt ist, dass er die Anzahl der von jedem Pixel der Anordnung erfassten rückgestreuten Elektronen zählt; und
eine Verarbeitungseinrichtung (165),
die kommunikativ mit dem Detektor für direkt geladene Teilchen (160) gekoppelt ist
und dazu ausgelegt ist, die Datenverarbeitungsschritte des Verfahrens gemäß einem der Ansprüche 1 bis 13 auszuführen.

## Revendications

1. Procédé de détermination des paramètres d'une fonction d'épaisseur permettant d'estimer l'épaisseur d'un échantillon (110), la fonction d'épaisseur définissant une relation entre l'épaisseur de l'échantillon (110) et une caractéristique statistique des électrons, le procédé comprenant :
l'acquisition de données sur les électrons rétrodiffusés de l'échantillon (110) à l'aide d'un détecteur direct de particules chargées (160)
comprenant un réseau de pixels et configuré pour compter le nombre d'électrons rétrodiffusés détectés par chacun des pixels du réseau lorsqu'un faisceau d'électrons (115) est incident sur l'échantillon (110),
les données relatives aux électrons rétrodiffusés, comprenant des ensembles de données, ces ensembles de données comprenant le nombre d'électrons rétrodiffusés détectés par chacun des pixels du réseau lorsque le faisceau d'électrons frappe une région respective de l'échantillon (110),
et l'épaisseur de l'échantillon (110) en chacune des régions concernées étant connue ;
la détermination, pour chaque ensemble de données, d'une caractéristique statistique respective des électrons ; et
l'ajustement des épaisseurs connues et des caractéristiques statistiques déterminées des électrons à la fonction d'épaisseur afin de déterminer les paramètres de cette dernière.

2. Procédé selon la revendication 1, dans lequel le volume d'interaction des électrons du faisceau d'électrons est dimensionné de telle sorte que la profondeur maximale à partir de laquelle les électrons rétrodiffusés atteignent le détecteur direct de particules chargées soit supérieure ou égale à l'épaisseur maximale de l'échantillon, et dans lequel le volume d'interaction des électrons est le volume à l'intérieur duquel les électrons du faisceau d'électrons incident interagissent avec l'échantillon.

3. Procédé selon la revendication 1 ou la revendication 2, dans lequel la caractéristique statistique de l'électron déterminée est l'une des suivantes, ou est fondée sur l'une des suivantes :un nombre moyen d'électrons déterminé, un nombre médian d'électrons déterminé, un nombre d'électrons correspondant à un quantile déterminé ou un nombre total d'électrons déterminé, et, le cas échéant, dans lequel :
le nombre moyen d'électrons déterminé correspond à la valeur moyenne calculée à partir de l'ensemble des pixels du réseau lorsque le faisceau d'électrons frappe une région de l'échantillon ;
le nombre médian d'électrons déterminé correspond à la valeur médiane calculée à partir de l'ensemble des pixels du réseau lorsque le faisceau d'électrons frappe une région de l'échantillon ;
le nombre d'électrons correspondant à un quantile déterminé est une valeur de quantile sélectionnée, calculée à partir de l'ensemble des pixels du réseau lorsque le faisceau d'électrons frappe une région de l'échantillon ; et
le nombre total d'électrons déterminé correspond à la valeur totale calculée à partir de l'ensemble des pixels du réseau lorsque le faisceau d'électrons frappe une région de l'échantillon.

4. Procédé selon l'une quelconque des revendications précédentes, dans lequel la fonction d'épaisseur définit que la caractéristique statistique des électrons déterminée augmente avec l'épaisseur de l'échantillon.

5. Procédé selon l'une quelconque des revendications précédentes, comprenant en outre l'estimation de l'épaisseur de l'échantillon au niveau d'une région de celui-ci, sur la base des paramètres déterminés de la fonction d'épaisseur et de la caractéristique statistique des électrons déterminée au niveau de cette région.

6. Procédé selon l'une quelconque des revendications précédentes, comprenant en outre, l'estimation de l'épaisseur d'un autre échantillon au niveau d'une zone de cet autre échantillon, sur la base des paramètres déterminés de la fonction d'épaisseur et de la caractéristique statistique des électrons déterminée au niveau de cette zone de l'autre échantillon, ledit autre échantillon ayant une composition chimique identique, ou sensiblement identique, à celle de l'échantillon.

7. Procédé selon la revendication 5 ou la revendication 6, dans lequel l'estimation de l'épaisseur de l'échantillon ou de l'autre échantillon au niveau d'une zone de l'échantillon ou de l'autre échantillon comprenant ce qui suit :
obtenir un ensemble de données issues de la rétrodiffusion d'électrons pour une région de l'échantillon ou pour un autre échantillon ;
déterminer les caractéristiques statistiques des électrons de l'ensemble de données ;
estimer l'épaisseur de l'échantillon ou des différents échantillons dans cette région en intégrant les caractéristiques électroniques statistiques déterminées dans la fonction d'épaisseur, avec les paramètres déterminés de cette dernière.

8. Procédé selon l'une quelconque des revendications précédentes, dans lequel la fonction d'épaisseur est l'une des suivantes, ou est basée sur l'une des suivantes :une fonction linéaire, une fonction logarithmique, une fonction exponentielle ou une fonction polynomiale.

9. Procédé selon l'une quelconque des revendications précédentes, dans lequel l'échantillon comprend l'un des suivants :
une couche ou un film déposé sur un substrat ;
un film autonome ; ou
une membrane autonome.

10. Procédé selon l'une quelconque des revendications précédentes, dans lequel les épaisseurs connues sont obtenues à partir d'un ou plusieurs parmi :des simulations, des essais préalables et une base de données répertoriant les épaisseurs connues d'échantillons cristallins.

11. Procédé selon l'une quelconque des revendications précédentes, dans lequel l'obtention des données de rétrodiffusion d'électrons comprend :
la direction du faisceau d'électrons de manière à ce qu'il frappe une première région de l'échantillon ;
la détermination du nombre d'électrons rétrodiffusés détectés par chaque pixel du réseau pour la première région de l'échantillon ;
la génération d'un premier ensemble de données comprenant le nombre d'électrons rétrodiffusés détectés par chaque pixel du réseau pour la première région de l'échantillon ;
le déplacement du faisceau d'électrons de manière à ce qu'il frappe une deuxième région de l'échantillon ;
la détermination du nombre d'électrons détectés par chaque pixel du réseau pour la deuxième région de l'échantillon ; et
la génération d'un deuxième ensemble de données comprenant le nombre d'électrons rétrodiffusés détectés par chaque pixel du réseau pour la deuxième région de l'échantillon.

12. Procédé selon la revendication 11, dans lequel la détermination, pour chaque ensemble de données, de la caractéristique statistique respective des électrons comprend la détermination d'une première caractéristique statistique des électrons pour le premier ensemble de données et la détermination d'une deuxième caractéristique statistique des électrons pour le deuxième ensemble de données.

13. Procédé selon la revendication 12, dans lequel l'ajustement des épaisseurs connues et de la caractéristique statistique des électrons déterminée à la fonction d'épaisseur afin de déterminer les paramètres de cette dernière comprend :
l'ajustement d'une première épaisseur connue et de la première caractéristique statistique des électrons correspondante, ainsi que d'une deuxième épaisseur connue et de la deuxième caractéristique statistique des électrons correspondante, à la fonction d'épaisseur afin de déterminer les paramètres de cette dernière,
dans laquelle la première épaisseur connue correspond à l'épaisseur connue de l'échantillon au niveau de la première région, et la deuxième épaisseur connue correspond à l'épaisseur connue de l'échantillon au niveau de la deuxième région.

14. Programme informatique comprenant des instructions qui, lorsque ce programme est exécuté par un ordinateur, amènent celui-ci à effectuer les étapes de traitement de données du procédé selon l'une quelconque des revendications précédentes.

15. Système permettant de déterminer les paramètres d'une fonction d'épaisseur destinée à estimer l'épaisseur d'un échantillon (110),
la fonction d'épaisseur définissant une relation entre l'épaisseur de l'échantillon (110) et une caractéristique statistique des électrons, le système comprenant :
un générateur de faisceau d'électrons (105) conçu pour fournir un faisceau d'électrons (115) en direction de l'échantillon (110) ;
un porte-échantillon (140) conçu pour maintenir l'échantillon (110) ;
un détecteur direct de particules chargées (160) comprenant un réseau de pixels et configuré pour compter le nombre d'électrons rétrodiffusés détectés par chacun des pixels du réseau ; et
un dispositif de traitement (165) couplé en communication au détecteur direct de particules chargées (160) et configuré pour exécuter les étapes de traitement des données du procédé selon l'une quelconque des revendications 1 à 13 .
